# EUROPEAN PATENT APPLICATION

(11) **EP 1 918 770 A2**
(43) Date of publication of application: **07.05.2008**
(21) Application number: 07254193.1
(22) Date of filing: 23.10.2007
(51) Int. Cl.: G02F 1/13357, F21V 7/00, G02B 27/00

(54) **LED backlight with bare chip LED**

(30) Priority: 26.10.2006 US 553249
(71) Applicant: K Laser Technology, Inc., Taiwan (TW)
(72) Inventor: Lee, Wai-Hon, Los Altos, CA 94024 (US)
(74) Representative: Cross, Rupert Edward Blount

(57) **Abstract**

A method and apparatus which uses the edge emitting characteristics of the LED bare chip to form a backlight with uniform illumination. This allows a reduced separation between the diffuser plate and the LED array. In one embodiment, the LED chip(s) is mounted over a prism structure, which redirects the side emitted light outwards.

## Description

### CROSS-REFERENCES TO RELATED APPLICATIONS

NOT APPLICABLE

### BACKGROUND OF THE INVENTION

The present invention relates to backlight light sources for a Liquid Crystal Display (LCD), and in particular a Light Emitting Diode (LED) light source..

Most modem color LCDs must be viewed with a light source behind the LCD panel. This light source is usually called a Backlight. At present, most applications use a Cold Cathode Fluorescent Lamp (CCFL) as light source for the backlight. This lamp emits light inside a tubular structure.

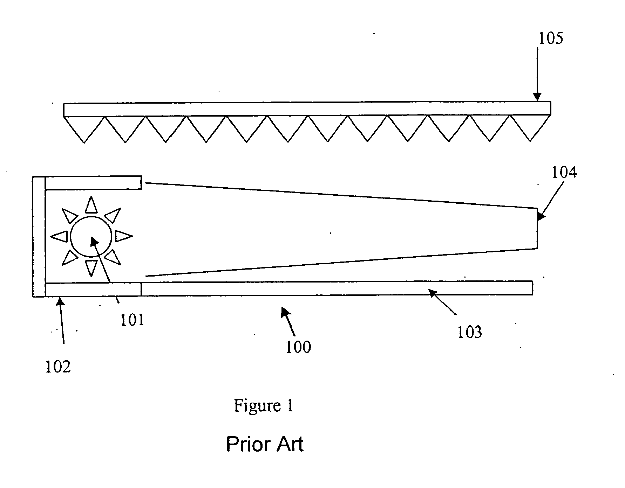

Figure 1 shows a side, cut-away view of a typical backlight unit 100 using a CCFL 101 which is housed in a reflective box 102. There is an opening on one side for the lamp to project light into a light guide 104. A prism film 105 is used to redirect the light towards the surface of the LCD. A reflective surface 103 is used behind the light guide to reflect stray light toward the LCD.

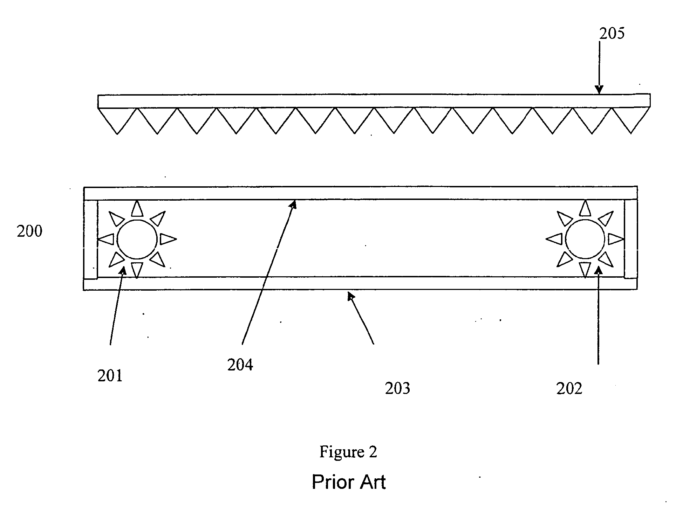

As shown in Figure 2, in order to provide a more intense illumination, some LCDs have two CCFLs 201 and 202 in opposite ends in the backlight unit. A light guide 203 causes the light to propagate upwards towards a diffuser 204 and a prism film 205.

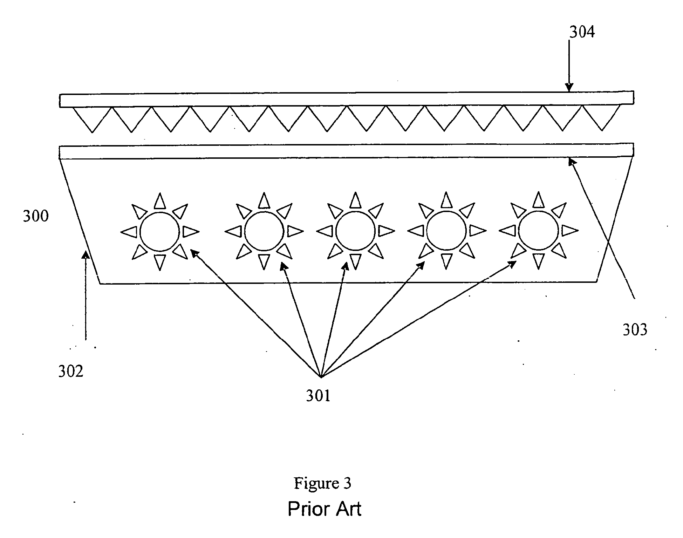

As shown in Figure 3, since the backlight unit used for LCD televisions is not restricted by the thickness of the display and more luminance is often needed for television viewing, multiple units of CCFL 301 are used in the backlight unit housed in a reflective box 302. The box 302 is covered by a diffuser 303. Again, a prism film 304 is placed on top of the diffuser to constrain the light propagation to a narrower diverging cone. Although a CCFL is a good light source for a LCD, its power consumption is relatively high and its life time is limited (to approximately 1000 hours in some cases). Light emitting diodes (LEDs) on the other hand have low power consumption and much longer life. With the demand of LCDs in notebook computers and televisions increasing, there has been a continuing effort to develop the LED as an alternative light source to a CCFL. So far, two methods of using LEDs to replace CCFLs have been investigated.

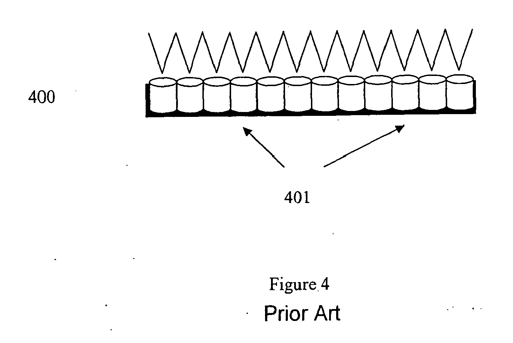

As shown in Figure 4, one technique is to use a linear array of LEDs 401 to form a light bar 400. In this case, it is simply a matter of replacing the CCFL in the back light unit by a LED light bar. Typically, LEDs are made with a chip that emits light from its four sides. The chip is then molded inside a high index plastic which serves as light guide to cause the LED to project light upwards.

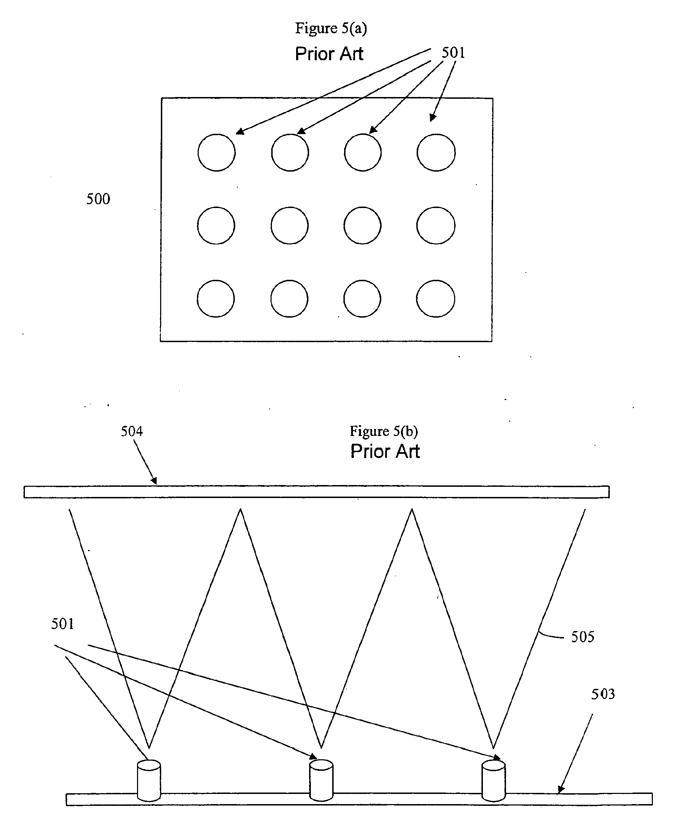

As shown in Figures 5(a) and 5(b), a second method is to place an array of LEDs 501 behind the LCD. Figure 5(b) shows the side view of Figure 5(a). LEDs 501 are bonded to a reflective printed circuit board (PCB) 503. Because of the diverging cone 505 of each LED, the diffuser 504 must be placed at some distance away from the LEDs so that the cone of light from each LED can overlap with its neighbors. This increases the thickness of the backlight unit. However, the light efficiency of direct illumination is higher than having the illumination coupled into the display from one side of the display.

### BRIEF SUMMARY OF THE INVENTION

The present invention provides a method and apparatus which uses the edge emitting characteristics of the LED bare chip to form a backlight with uniform illumination. This allows a reduced separation between the diffuser plate and the LED array. In one embodiment, the LED chip(s) is mounted over the prism structure, which redirects the side emitted light upwards.

In one embodiment, a plurality of LED chips are used. The LED chips may be different colors, so that the combination produces white light. The LED bare chip is first mounted on a heat sink, which is in turn mounted on a printed circuit board containing a prism film.

In one embodiment, a second prism film is mounted above the LED, in addition to the first prism film mounted below. Additionally, a diffuser may be mounted above the second prism film.

In one embodiment, the LED and prism structure are covered with a polymer containing particles having a refractive index different from that of the polymer, to diffract the light. In particular, the particles may be air bubbles.

### BRIEF DESCRIPTION OF THE DRAWINGS

Figure 1 is a diagram of a prior art backlight using a CCFL light source.

Figure 2 is a diagram of a prior art backlight using two CCFLs.

Figure 3 is a diagram of a prior art backlight unit using multiple CCFLs.

Figure 4 is a diagram of a prior art LED light bar.

Figure 5 is a diagram of a prior art LED array.

Figures 6(a) and (b) are diagrams of a prior art (a) edge emitting characteristics of an LED bare chip (side view); and (b) a top view of light emitted from an LED bare chip

Figures 7(a) and (b) are diagrams of one embodiment of (a) a side view of an LED back light unit of this present invention; and (b) a top view of a light pattern projected by a single LED bare chip backlight unit of this present invention.

Figure 8 is a diagram of an array of LED bare chips on a diffusing printed circuit board according to an embodiment of this invention.

Figure 9 is a diagram of an embodiment of the reflective structure on the printed circuit board of this invention.

Figure 10 shows a linear prism array according to an embodiment of the invention.

Figure 11 is a diagram of an embodiment of the invention adding a polymer with particles to aid diffusion.

Figures 12(a) - (c) show another embodiment of this present invention with LEDs bonded on a rectangular PCB and then encapsulated by a transparent trapezoidal structure.

### DETAILED DESCRIPTION OF THE INVENTION

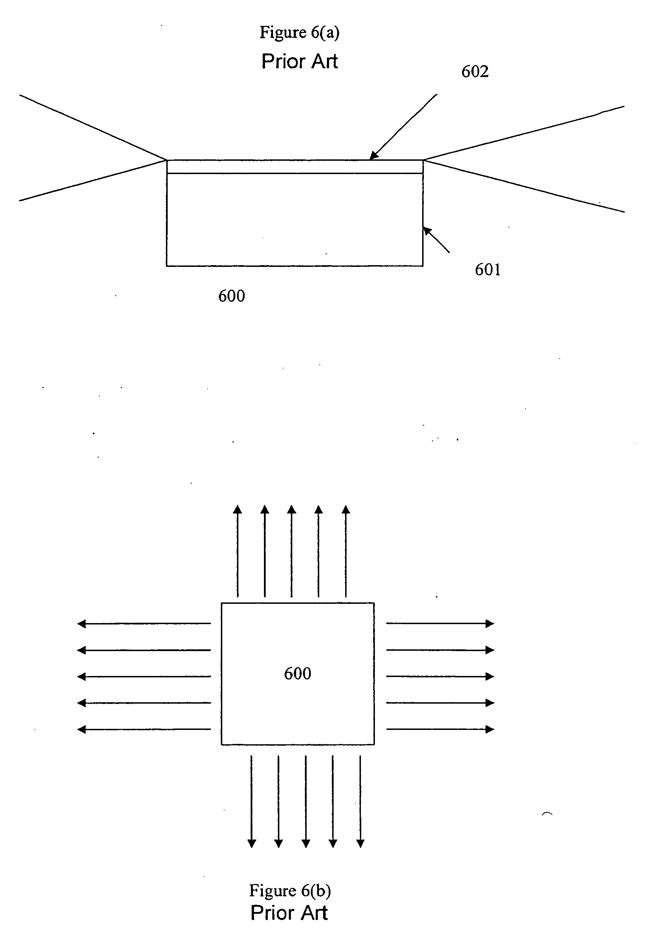

Figure 6 shows a side view of a prior art LED bare chip 600. A junction layer 602 is grown on top of a substrate 601. When an electric current passes through the junction layer, light will be emitted from the junction as shown in Figure 6(a). Figure 6(b) shows the top view of LED chip 600. It can be seen that light is emitting from the four sides of the chip. This is the most common technique in fabricating a LED. An LED can be fabricated to emit light from the top surface also. However, the process is more complicated and thus has a higher manufacturing cost. Yet the surface emitting type LED has no advantage in the scheme of this present invention. In a commercially available LED package, the bare chip is often molded inside a high index plastic which serves as light guide to cause the LED to project light upwards.

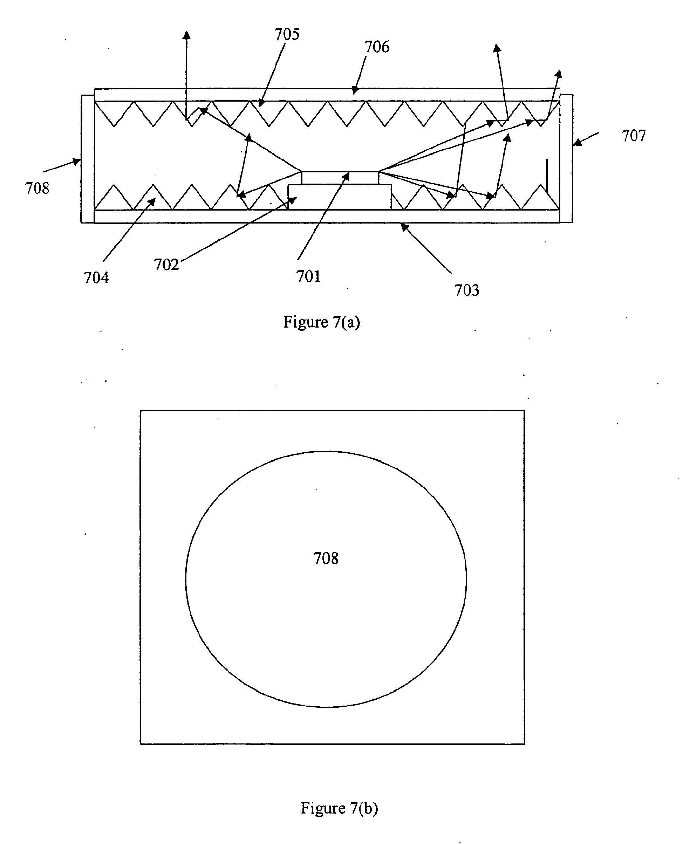

Figure 7 shows a backlight unit with a single LED bare chip according to an embodiment of the invention. It illustrates how to convert the light emitting from the edge of the LED bare chip into light propagating upwards as required by a backlight unit. As can been seen, LED bare chip 701 is first mounted on a heat sink 702 which is in turn mounted on printed circuit board 703. The heat sink serves to dissipate heat generated by the LED chip and at the same time elevate the LED chip so that the edge emitted light can be projected to a farther distance. The heat sink structure 702 is not necessary if the substrate of the LED is made thicker. A reflective structure 704 (such as a prism film) is attached to the printed circuit board in the area surrounding the LED chip as shown. This reflective structure, or prism structure, has structures (shown as triangles) which reflect the light upward. The printed circuit board is enclosed by reflective walls 707 and 708. Light emitted by the LED perpendicular to walls 707 and 708 will be scattered by these walls until all the light emitted from the LED propagates vertically. Figure 7 shows light rays incident on structure 704 and being reflected upwards. In a similar fashion light rays incident on phase structure 705 are refracted upwards. There is a diffuser 706 on top of the refractive film 705 to make the light from the LED more uniform.

Figure 7(b) shows the light pattern (circle 708) emerging from the diffuser. Depending on the diverging cone of the light emitting from the LED chip, the diameter of the light pattern is often more than twice the separation between the LED chip 701 and the diffuser 706.

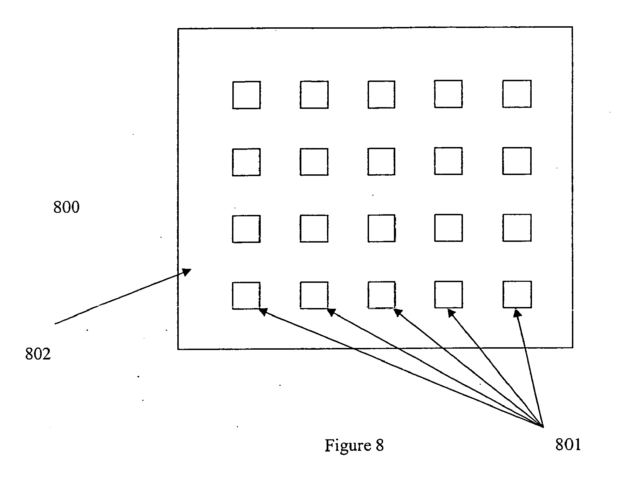

Figure 8 is a diagram of a backlight array using an array of bare chip LEDs according to an embodiment of the invention. In using this concept to construct a back light unit 800, an array of LEDs 801 as shown in Figure 8 will be laid down on a printed circuit board (PCB) 802. Each of the LED units 801 will contain LEDs separately emitting in red light, green light and blue light. Because green LEDs are often weaker than red and blue LEDs, two green LED are used for every red and blue LED. These LEDs are mounted on printed circuit board 802 which has a reflective structure in area surrounding the LEDs. This PCB with the LED will be surrounded by 4 reflective walls and covered with a refractive structure and a diffuser as shown in Figure 7.

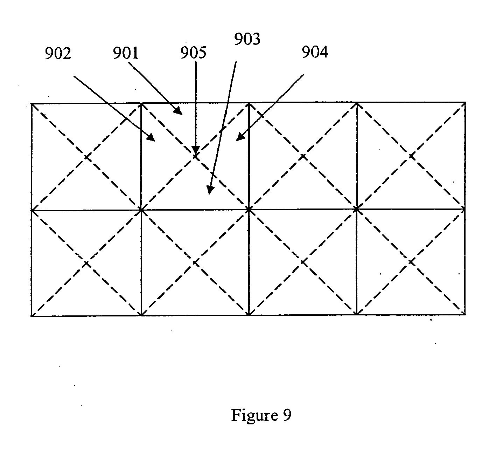

In one embodiment, the refractive structure is a prismatic film such as the one shown in Figure 9. In this top view of the prismatic film, each prism has 4 sides 901, 902, 903 and 904. The apex of the prism is 905. Prisms with more sides can also be utilized in this present invention. In one embodiment, the prism structure is irregular, random or pseudorandom, with a variation in the size, apex, thickness or other aspect of the prisms for at least a plurality of the prisms.

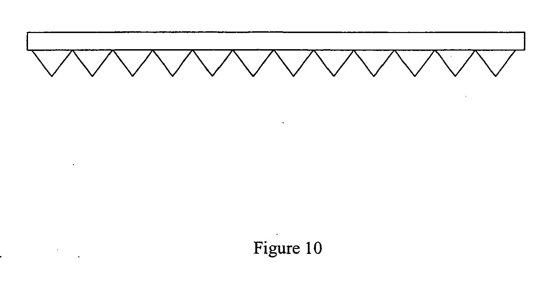

Figure 10 shows a linear prism array according to an embodiment of the invention. Two of such linear prisms can be stacked together, with one being rotated to be perpendicular to the first one. The reflective structure surrounding the LEDs can also be made of a prismatic structure or some other manufactured surface to reflect the light upwards.

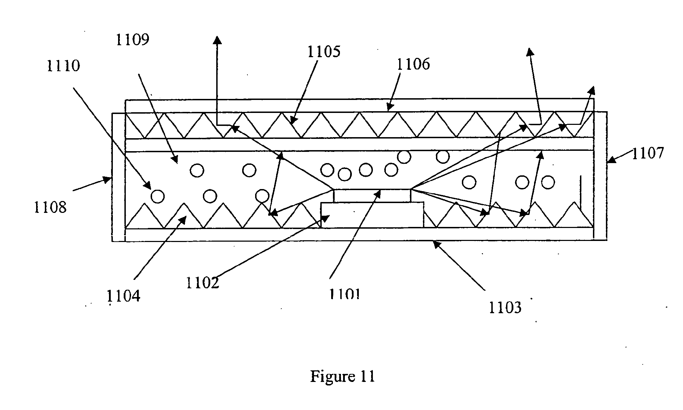

Figure 11 is a diagram of an embodiment of the invention adding a polymer with particles to aid diffusion. In this embodiment the space 1109 inside the enclosure is filled with a polymer containing particles, such as particle 1110, having a refractive index different from that of the polymer. In one embodiment, the particles are air bubbles. A polymer containing air bubbles is poured into the cavity 1109 and then hardened by heat curing or by ultra violet light. These particles will scatter the light emitted by the LEDs to make the projected light more uniform.

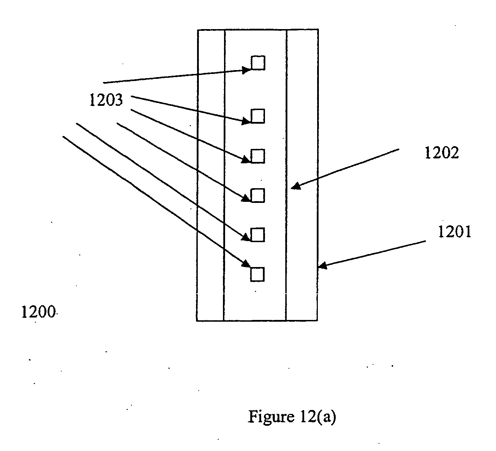

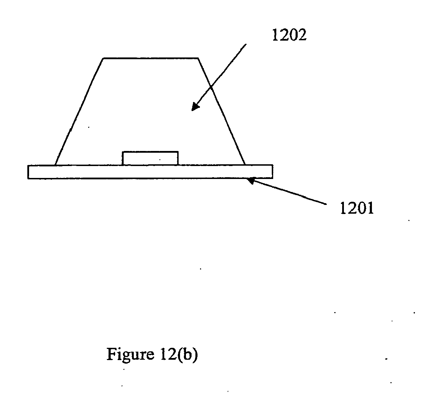

Figures 12(a) - (c) show another embodiment of this present invention. Instead of bonding the LED chips directly on a large PCB , the LEDs 1203 are first bonded on a rectangular PCB 1201. The top view of this LED light bar is shown in Figure 12(a). The LEDs 1203 are encapsulated by a transparent trapezoidal structure 1202 as shown in Figure 12(b). This is a preferred structure to couple the light to the side of the light bar 1200 instead of towards the top of the light bar.

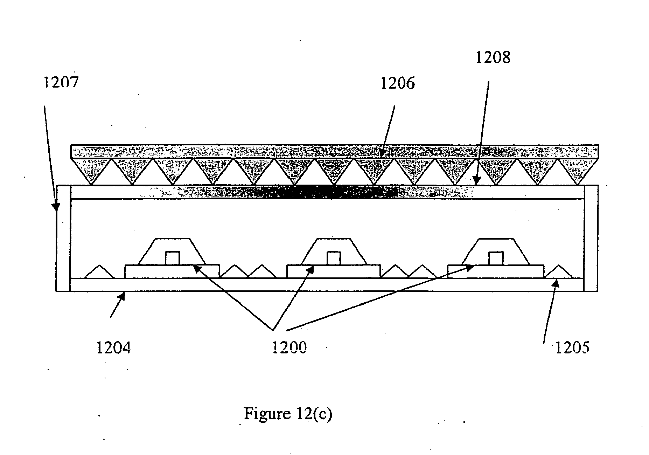

Figure 12 (c) shows how LED light bars are used in the back light of this present invention. LED light bars 1200 are bonded to a large PCB 1204 embedded in between reflective diffusing structure 1205. As shown, the reflective diffusing structure is a prismatic film. Other reflective structures can be used in this present invention. The LED light bars are covered by a diffuser 1208 and a prismatic film 1206. The four sides of the back light unit are surrounded by a reflective walls, such as reflective wall 1207.

As will be understood by those of skill in the art, the present invention could be embodied in other specific forms without departing from the essential characteristics thereof. For example, only one of the prismatic films of Figure 7(a) might be used, or a flat reflective surface may be employed rather than a prismatic surface. Alternately, the LED could be in a package, and placed on its side, such as at the end of the back light. Accordingly the foregoing description is intended to be illustrative, but not limiting, of the scope of the invention which is set forth in the following claims.

## Claims

1. A back light unit comprising:
a substrate;
at least one bare chip LED mounted over said substrate;
a reflective structure, mounted on said structure adjacent said bare chip LED, such that light emitted from sides of said bare chip LED is reflected outward.

2. The back light unit of claim 1, wherein said substrate comprises a printed circuit board.

3. The back light unit of claim 1 or claim 2 further comprising:
a plurality of reflective walls around said reflective structure.

4. The back light unit of any preceding claim further comprising:
a transparent refractive structure mounted, spaced from said bare chip LED, on a side of said LED opposite said reflective structure and substrate.

5. The back light unit of claim 4, wherein said refractive structure is a two dimensional array of prisms.

6. The back light unit of claim 4, wherein said refractive structure comprises two linear prismatic films, with a first film being rotated by an angle with respect to a second film.

7. The back light unit of claim 6 wherein the angle of rotation is 90 degrees.

8. The back light unit of any preceding claim further comprising:
a diffuser mounted, spaced from said bare chip LED, on a side of said LED opposite said reflective structure and substrate.

9. The back light unit of any preceding claim further comprising:
a plurality of LEDs, including LEDs which emit red light, green light and blue light.

10. The back light unit of any preceding claim, wherein the reflective structure comprises a plurality of small prisms.

11. The back light unit of any preceding claim wherein the reflective structure comprises a random patterned surface.

12. The back light unit of any preceding claim further comprising:
a polymer with scattering particles inside a cavity containing said at least one LED, said particles improving the uniformity of light distribution.

13. The back light unit of claim 12 wherein said scattering particles comprise air bubbles.

14. The back light unit of any preceding claim wherein said LED is encapsulated by a transparent trapezoidal structure.

15. The back light unit of claim 14 wherein said LED is mounted on a PCB prior to being encapsulated by said transparent trapezoidal structure.

16. A back light unit comprising:
a printed circuit board substrate;
a plurality of heat sinks mounted over said substrate;
a plurality of bare chip LEDs mounted over said heat sinks;
a reflective structure having an irregular prismatic pattern, mounted on said structure adjacent said bare chip LED, such that light emitted from sides of said bare chip LED is reflected outward;
a plurality of reflective walls around said reflective structure; and
a transparent refractive structure mounted, spaced from said bare chip LED, on a side of said LED opposite said reflective structure and substrate.
